(19) Europäisches Patentamt
European Patent Office
Office européen des brevets

(11) **EP 3 039 495 B1**

(12) **EUROPÄISCHE PATENTSCHRIFT**

(45) Veröffentlichungstag und Bekanntmachung des Hinweises auf die Patenterteilung:
**16.01.2019 Patentblatt 2019/03**

(21) Anmeldenummer: **14758340.5**

(22) Anmeldetag: **27.08.2014**

(51) Int Cl.:
*G05B 19/18* (2006.01)    *G05B 19/401* (2006.01)
*G05B 19/406* (2006.01)    *G05B 19/416* (2006.01)
*B23Q 15/12* (2006.01)

(86) Internationale Anmeldenummer:
**PCT/EP2014/068158**

(87) Internationale Veröffentlichungsnummer:
**WO 2015/028502 (05.03.2015 Gazette 2015/09)**

(54) **VERFAHREN ZUR EINSTELLUNG DES ENERGIEVERBRAUCHS VON ZWEI WERKZEUGEN BEI DER BEARBEITUNG VON ROHRABSCHNITTSENDEN**

METHOD FOR ADJUSTING THE ENERGY CONSUMPTION OF TWO TOOLS DURING THE MACHINING OF PIPE SECTION ENDS

PROCÉDÉ D'AJUSTEMENT DE LA CONSOMMATION D'ÉNERGIE DE DEUX OUTILS LORS DE L'USINAGE DES EXTRÉMITÉS DE TRONÇONS DE TUBES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2013 DE 102013109407**

(43) Veröffentlichungstag der Anmeldung:
**06.07.2016 Patentblatt 2016/27**

(73) Patentinhaber: **Rattunde AG**
**19288 Ludwigslust (DE)**

(72) Erfinder: **RATTUNDE, Ulrich**
**19322 Bentwisch (DE)**

(74) Vertreter: **Groth, Wieland**
**Patentanwalt**
**Zippelhaus 4**
**20457 Hamburg (DE)**

(56) Entgegenhaltungen:
**DE-A1- 4 318 102       JP-A- S6 062 439**
**JP-A- S59 232 745     US-A1- 2006 271 231**
**US-A1- 2008 008 549**

EP 3 039 495 B1

**Beschreibung**

Die Erfindung betrifft ein Verfahren zum Bearbeiten eines Werkstücks.

Verfahren zum Bearbeiten von Werkstücken, insbesondere in Form von Langprofilabschnitten, sind im Stand der Technik hinlänglich bekannt.

Üblicherweise werden Werkstücke als Rohrabschnitte von Rohren abgelängt und die beiden Enden der Rohrabschnitte während einer weiteren Behandlung wie Waschen, Anfasen, Bürsten unterworfen. Beim Anfasen der beiden Enden des abgelängten Rohrabschnitts werden eine Innen- und Außenfase sowie ein Planmaß auf jedes der beiden Rohrenden mittels jeweils eines Werkzeugkopfes aufgefast. Bei dem Anfasvorgang wird die Gesamtlänge des Rohres von einer Ist-Länge auf eine Fertigungslänge reduziert. Beide Enden sollen jeweils ein völlig glattes Planmaß und gleiche Innen- und Außenfasen haben. Die vom Planmaß abgetragene Materialmenge, das Planaufmaß, soll möglichst klein sein, um wenig Material zu verschwenden.

Während des Anfasens ist der Rohrabschnitt rotationsfest eingespannt. Die Fertigungslänge wird durch den Abstand der beiden aufeinander zu und voneinander weg verfahrbaren Werkzeugköpfe exakt bestimmt. Problematisch ist dabei, dass zum einen die exakte Position des Rohrabschnitts in der Spannvorrichtung bei jedem Arbeitstakt variieren kann und zum anderen die Enden verschiedener Rohrabschnitte nie exakt gleich sind. Es existieren demnach Toleranzen. Gemäß dem Stand der Technik werden die beiden Enden gleichzeitig durch zwei Werkzeugköpfe bearbeitet, indem ein Rohrabschnitt mit einer Ist-Länge vom Rohr abgelängt wird, die gegenüber der Fertigungslänge deutlich zu lang ist. Der deutlich zu lange Rohrabschnitt wird eingespannt, und von beiden Seiten arbeitet der Werkzeugkopf so lange Material vom jeweiligen Rohrende ab, bis die beiden Werkzeugköpfe voneinander den Fertigungsabstand annehmen. Dabei ist die Ist-Länge so groß, dass die oben genannten Toleranzen ausgeglichen werden, allerdings auf Kosten eines größeren Materialabtrags.

In der DE 19 637 191 A1 ist ein Verfahren offenbart, bei dem bei einer Werkstückbearbeitung pro Zeiteinheit konstant viel Material vom Werkstück abgetragen werden kann, indem der Vorschub so gesteuert wird, dass abhängig vom Schnittvolumen an jeder Stelle des Werkstücks weder ein zu hoher noch ein zu niedriger Materialabtrag erfolgt.

In der DE 33 48 159 C2 ist ein Steuergerät für eine Schleifmaschine offenbart, bei der das Bearbeitungsleistungsniveau kontinuierlich geregelt wird, indem Maschinensteuereingangsgrößen variiert werden und indem die Steuerungseingangssignale in einer zeitvariablen und optimalen Weise in Abhängigkeit von sich ändernden Bearbeitungsparametern beim Fortschreiten des Bearbeitungsprozesses erteilt werden.

Aus der DE 10 2004 052 790 B3 ist ein Verfahren zur Optimierung von Vorschubwerten in NC-Programmen CNC-gesteuerter Werkzeugmaschinen bekannt.

Die DE 22 08 123 A offenbart ein Steuergerät für Schleifmaschinen, das eine verbesserte Steuerung hinsichtlich der tatsächlichen endgültigen Oberflächenbearbeitung und Rundheit vorsieht.

DE 43 18 102 A1 offenbart ein Verfahren zum Schleifen eines Werkstückes (z.B. Zahnrad) mit einem einzigen Schleif-Werkzeug, wobei die zwei Seiten des Schleif-Werkzeugs möglichst symmetrisch bzw. gleich beansprucht werden sollen, um thermische Überbeanspruchung zu vermeiden. Dazu wird die Drehzahl der Schleifspindel und ein Drehmoment gemessen und daraus die kinetische Energie der Schleifspindel ermittelt und mit Referenzwerten verglichen. Auch wird mittels Dehnungsmeßstreifen am Lager des Schleif-Werkzeugs ein Torsionsmoment gemessen, welches ein Maß für die Unsymmetrie der Energieverteilung an den beiden Seiten des Schleif-Werkzeugs darstellt. Dieses Verfahren ist nicht zur gleichzeitigen Bearbeitung von zwei Rohrenden geeignet.

JP 60-62439 A offenbart ein Verfahren zur Bearbeitung eines Werkstücks mittels zwei Werkzeugen einer Drehmaschine, wobei die Werkzeuge gleichzeitig bewegt werden und somit gleichzeitig mit dem Werkstück in Kontakt kommen und dadurch eine symmetrische Bearbeitung stattfindet. Dieses Verfahren ist ebenfalls nicht zur gleichzeitigen Bearbeitung von zwei Rohrenden geeignet.

US 2008/008549 A1 offenbart ein Verfahren zur gleichzeitigen Bearbeitung von zwei Rohrenden, wobei jedoch die symmetrische Bearbeitung der zwei Rohrenden unter Verwendung des Energieverbrauchs der zwei Werkzeuge nicht offenbart ist.

Es ist Aufgabe der vorliegenden Erfindung, ein Verfahren zum Bearbeiten eines Langprofilabschnitts mit einer Ist-Länge und zwei Enden zur Verfügung zu stellen, das einen geringeren Materialabtrag erfordert.

Die Aufgabe wird durch ein Verfahren gemäß Anspruch 1 gelöst.

Unter einem Zeitinkrement wird ein Zeitintervall verstanden. Das Zeitintervall kann sehr kurz sein und etwa 0,001 bis 0,01 Sekunden, vorzugsweise 0,006 ± 0,001 Sekunden betragen. Die Zeitinkremente können alle eine gleiche, aber auch unterschiedliche Längen haben.

Es wird ein einzelner Energieverbrauch als die mit der abgetragenen Materialmenge korrespondierende einzelne Größe gewählt. Der einzelne Energieverbrauch eines Werkzeugkopfes korreliert mit der während des Zeitinkrementes abgetragenen Materialmenge durch den Werkzeugkopf. Es liegt ein proportionaler, vorzugsweise ein linearer Zusammenhang vor. Der Zusammenhang kann empirisch ermittelt werden.

Vorzugsweise wird während jedes Zeitinkrementes eine Winkelgeschwindigkeit des Werkzeugkopfes gemessen und aus der Winkelgeschwindigkeit und dem Drehmoment und der Dauer des Zeitinkrementes ein einzelner Energieverbrauch durch Multiplikation während des Zeitinkrementes ermittelt.

Der Energieverbrauch hängt stark von dem jeweils wirkenden Drehmoment ab, die Winkelgeschwindigkeit bleibt günstigerweise während des gesamten Bearbeitungsvorgangs im Wesentlichen konstant oder ändert sich nur geringfügig. Es ist jedoch auch denkbar, dass sich die Winkelgeschwindigkeit erheblich ändert.

In einer bevorzugten Ausführungsform der Erfindung werden die einzelnen Energieverbräuche eines Werkzeugkopfes aufsummiert und ein Gesamtenergieverbrauch eines Werkzeugkopfes bestimmt. Der Gesamtenergieverbrauch ermöglicht die Bestimmung der exakten Größe der durch einen einzelnen Werkzeugkopf abgetragenen Materialmenge. Durch die Bestimmung der Größe der abgetragenen Materialmenge durch einen einzelnen Werkzeugkopf kann durch Vergleich der abgetragenen Materialmenge von zwei Enden eines Werkstücks durch zwei Werkzeugköpfe eine Bearbeitung erzielt werden, die besonders wenig Material abträgt.

Unter dem Gesamtenergieverbrauch wird der gesamte Energieverbrauch bis zu einem bestimmten Zeitpunkt verstanden.

Bei den Langprofilabschnitten handelt es sich insbesondere um vollständig aus Metall bestehende Langprofilabschnitte, insbesondere um Vollprofile oder Rohre.

Vorzugsweise wird ein Werkstück als Langprofilabschnitt einer Ist-Länge mit zwei Enden zur Verfügung gestellt und durch das erfindungsgemäße Verfahren weiterbearbeitet, insbesondere angefast. Jedes der beiden Enden wird von jeweils einem Werkzeugkopf bearbeitet. Während der Bearbeitung wird ein Gesamtenergieverbrauch jeder der beiden Werkzeugköpfe ermittelt. Der Langprofilabschnitt wird dabei bis auf eine Fertigungslänge verkürzt. Wenn Differenzen der Energieverbräuche festgestellt werden, werden die beiden Energieverbräuche einander angeglichen. Die Angleichung findet vorzugsweise erst dann statt, wenn die Differenz der beiden Gesamtenergieverbräuche einen Grenzwert überschritten hat.

Dabei ist es vorgesehen, dass beide Werkzeugköpfe Material vom einen und vom anderen Ende abtragen und das Verhältnis der beiden Materialmengen bei aufeinanderfolgenden Arbeitstakten gleich, vorzugsweise exakt gleich bleibt oder gleichbleibend geregelt wird. Insbesondere kann es vorgesehen sein, von beiden Enden des Langprofilabschnitts bei aufeinanderfolgenden Arbeitstakten, vorzugsweise jedem Arbeitstakt gleich viel Material abzutragen. Das ist insbesondere der Fall, wenn Planaufmaß und Innen- und Außenfase beider Enden eines Langprofils gleich ausgestaltet sind und so ausgestaltet auch bei aufeinanderfolgenden Arbeitstakten bleiben. Wenn die beiden Enden eines Langprofils verschiedene Innen- und Außenfasen haben, ist der Materialabtrag an beiden Enden unterschiedlich und weist das genannte Verhältnis beider Materialmengen auf. Das Verhältnis der beiden abgetragenen Materialmengen wird zwischen aufeinanderfolgenden Arbeitstakten gleichbleibend geregelt, indem die beiden Energieverbräuche ein gleichbleibendes Verhältnis aufweisen oder auf ein gleichbleibendes Verhältnis geregelt werden.

Vorzugsweise wird die Bearbeitung der beiden Werkzeugköpfe so geregelt, dass ein minimales Planaufmaß von beiden Enden abgetragen wird. Dazu werden die Langprofilabschnitte so zwischen beiden Werkzeugköpfen bearbeitet, dass der Bearbeitungsweg beider Werkzeugköpfe, also die während der Bearbeitung von dem Werkzeugkopf zurückgelegte Weglänge, minimal wird.

Das Verfahren symmetrisiert die Bearbeitung der beiden Enden des Langprofilabschnitts. Die beiden Werkzeugköpfe werden so gesteuert, dass, wenn der Gesamtenergieverbrauch des einen der beiden Werkzeugköpfe größer ist als der des anderen Werkzeugkopfes, der Vorschub des anderen Werkzeugkopfes im Vergleich zu dem einen Werkzeugkopf vergrößert wird. Auf diese Weise kann während der Bearbeitung eines Langprofilabschnitts innerhalb eines Arbeitstaktes bereits eine Symmetrisierung der Bearbeitung beider Enden des Langprofilabschnitts erfolgen.

Es ist auch bevorzugt vorgesehen, die Bearbeitung des Langprofilabschnitts vollständig durchzuführen, die Gesamtenergien der beiden Werkzeugköpfe zu vergleichen und das Ergebnis des Vergleichs zur Veränderung der Steuerung, insbesondere des Vorschubs der beiden Werkzeugköpfe bei der Bearbeitung eines nächsten Langprofilabschnittes innerhalb eines nächsten, vorzugsweise unmittelbar nachfolgenden Arbeitstaktes zu verwenden.

Die zwei Enden werden mit jeweils einem Werkzeugkopf bearbeitet und das Werkstück insgesamt auf eine Fertigungslänge gebracht, die durch einen zugehörigen Abstand der beiden Werkzeugköpfe voneinander bestimmt wird.

Vorzugsweise handelt es sich bei dem Langprofilabschnitt um einen Rohrabschnitt, und in die beiden Enden werden jeweils eine Innenfase und/oder eine Außenfase und/oder ein Planaufmaß eingefräst.

Die Erfindung wird anhand eines Ausführungsbeispiels in drei Figuren beschrieben. Dabei zeigen:

Fig. 1    eine seitliche Prinzipansicht eines Rohrabschnitts und zwei Anfasköpfe,

Fig. 2    eine grafische Darstellung des Drehmoments in Abhängigkeit von der Anfasdauer bei konstanter Winkelgeschwindigkeit,

Fig. 3    eine grafische Darstellung der Energie in Abhängigkeit von der Anfasdauer bei konstanter Winkelgeschwindigkeit.

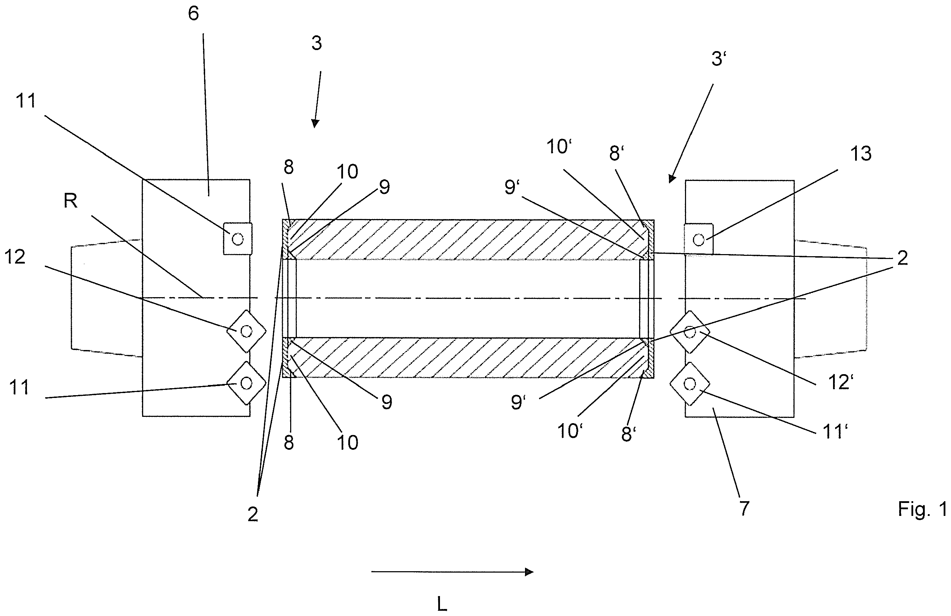

Fig. 1 zeigt den in einer nicht dargestellten Spannvorrichtung eingespannten Rohrabschnitt 1. Der Rohrabschnitt 1 wird in der durch die äußere in der seitlichen Ansicht rechteckigen Umrandung dargestellten Form mit einer Ist-Länge L1 eingespannt, und während eines Bearbeitungsverfahrens wird ein in Fig. 1 schraffiert dargestellter Bereich 2 abgetragen und der Rohrabschnitt 1 auf eine Fertigungslänge L2 verkürzt.

Der Rohrabschnitt 1 wird mit einer Rohrschneidemaschine von einem Rohr abgelängt. Durch das Ablängen weist der Rohrabschnitt 1 an seinem einen Rohrabschnittsende 3 und an seinem anderen Rohrabschnittsende 3' scharfe Kanten auf. Der Rohrabschnitt 1 wird von dem Rohr in seiner Ist-Länge L1 abgelängt, insbesondere abgesägt oder abgeschnitten. Die Ist-Länge L1 entspricht der Längsausdehnung des Rohrabschnitts 1 in seiner rechteckigen Kontur in einer Längsrichtung L. Nach dem Ablängen wird der Rohrabschnitt 1 mittels zweier Werkzeugköpfe 6, 7, die gleichzeitig und gegensinnig auf derselben Rotationsachse R rotieren, bearbeitet. Jeder der Werkzeugköpfe 6, 7 bringt eine Außenfase 8, 8', eine Innenfase 9, 9' und ein Planaufmaß 10, 10' auf jedes der beiden Rohrabschnittsenden 3, 3' auf. Durch die Bearbeitung der beiden Rohrabschnittsenden 3, 3' mittels der beiden Werkzeugköpfe 6, 7 wird die Ist-Länge L1 auf die gewünschte und gegenüber der Ist-Länge L1 kürzere Fertigungslänge L2 verkürzt. Die Fertigungslänge L2 wird durch einen vorgebbaren Abstand der beiden Werkzeugköpfe 6, 7 nach Abschluss der Bearbeitung der beiden Rohrabschnittsenden 3, 3' erzielt. Jeder der Werkzeugköpfe 6, 7 weist drei Schneidplatten 11, 12, 13 bzw. 11', 12', 13' auf, die entsprechend der Figur 1 durch Rotationsbewegung der Werkzeugköpfe 6, 7 die entsprechende Außenfase 8, 8', die Innenfase 9, 9' und das Planaufmaß 10, 10' auf die beiden Rohrenden 3, 3' fasen und dabei Material von den beiden Rohrabschnittsenden 3, 3' abtragen.

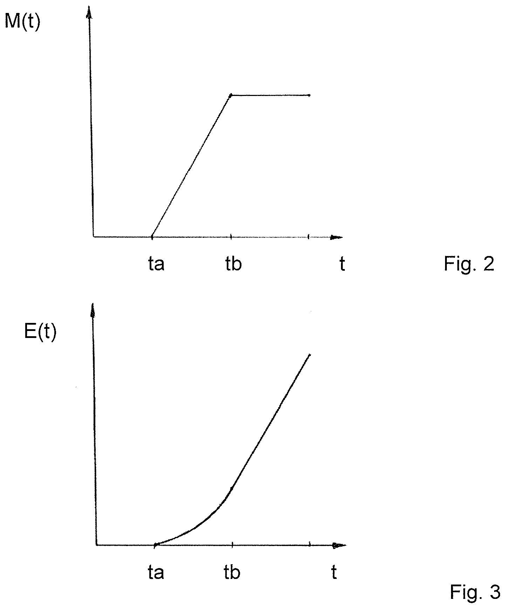

Ein Antrieb jeder der beiden Werkzeugköpfe 6, 7 erzeugt ein Drehmoment M(t) und ein anderes Drehmoment M'(t) an dem einen 3 bzw. an dem anderen Rohrabschnittsende 3'. Das zunächst am einen Rohrabschnittsende 3 wirkende eine Drehmoment M(t) ist gemäß Figur 2 null, wenn der zugehörige Werkzeugkopf 6 keine Berührung mit dem einen Rohrabschnittsende 3 hat. Sobald ein Kontakt zwischen Werkzeugkopf 6 und dem einen Rohrabschnittsende 3 zu einem Zeitpunkt ta stattfindet, beginnt das eine Drehmoment M(t) auf den Werkzeugkopf 6 zu wirken. Je weiter der Werkzeugkopf 6 in das Material des einen Rohrabschnittsendes 3 eindringt, desto größer werden die von den drei Schneidplatten 11, 12, 13 bearbeiteten Flächen des einen Rohrabschnittsendes 3, und das wirkende eine Drehmoment M(t) erhöht sich dementsprechend gemäß Figur 2 im Wesentlichen linear. Wenn das eine Rohrabschnittsende 3 zu einem Zeitpunkt tb seine gewünschte Außenkontur durch Anfasen erreicht hat, also die eine Innen- und Außenfase 9, 8 und das eine Planmaß 10, die gewünschte Größe haben, ändert sich das eine Drehmoment M(t) nicht mehr. Die von dem Werkzeugkopf 6 bearbeiteten Flächen weisen während der weiteren Bearbeitungsdauer nach dem Zeitpunkt tb eine gleiche Größe auf, so dass das eine Drehmoment M(t) gemäß Figur 2 ab einem Zeitpunkt tb konstant bleibt. Ab dem Zeitpunkt tb wird lediglich die Länge des Rohrabschnitts 1 verkürzt.

Das Gleiche gilt für das andere Rohrabschnittsende 3'. Die obige Beschreibung gilt entsprechend für das andere Drehmoment M'(t), die andere Innenfase 9', die andere Außenfase 8' und das andere Planmaß 10', die durch Abtragen von Material durch die Schneidplatten 11', 12', 13' vom anderen Rohrabschnittsende 3' gefertigt werden.

Problematisch ist, den Materialabtrag möglichst gering zu halten. Die beiden Drehmomente M(t), M'(t) liefern, nachdem die Außenkontur zum Zeitpunkt tb erreicht ist, keinen Anhaltspunkt dafür, wie weit der eine oder der andere Werkzeugkopf 6, 7 in Längsrichtung L bzw. entgegen der Längsrichtung L in das jeweilige Rohrabschnittsende 3, 3' vorgeschoben ist.

Erfindungsgemäß wird zur Bearbeitung des einen Rohrabschnittsendes 3 ein Gesamtenergieverbrauch E(t) bis zu einem Bearbeitungszeitpunkt t ermittelt. Der Gesamtenergieverbrauch E(t) wird in Figur 3 dargestellt. Er ändert sich über die gesamte Bearbeitungsdauer fortlaufend, indem er monoton ansteigt. Der Gesamtenergieverbrauch E(t) bis zum Zeitpunkt t korreliert mit einem Materialabtrag bis zu diesem Zeitpunkt t. Da beide Rohrabschnittsenden 3, 3' gleichzeitig bearbeitet werden, werden der eine E(t) und ein anderer Gesamtenergieverbrauch E'(t) bis zum Zeitpunkt t ermittelt. Der Vergleich der beiden Gesamtenergieverbräuche E(t), E'(t) ist ein Kriterium dafür, inwieweit die beiden Rohrabschnittsenden 3, 3' symmetrisch bearbeitet werden, also inwieweit gleichviel Material von beiden Rohrabschnittsenden 3, 3' abgetragen wird. Ziel ist ein am Ende der Bearbeitungsdauer möglichst gleicher Materialabtrag von beiden Rohrabschnittsenden 3, 3'.

Die Ermittlung der einen Gesamtenergie E(t) wird am Beispiel des einen Werkzeugkopfes 6 erläutert. Sie ist analog unter Ersetzung der entsprechenden Bezugszeichen auf den anderen Werkzeugkopf 7 übertragbar.

Es werden einzelne Energieverbräuche E($\Delta$ti) während verschiedener Zeitinkremente $\Delta$ti, i=1, ..., n ermittelt. Die Zeitinkremente $\Delta$ti können alle dieselbe Länge haben oder auch verschiedene Längen. Die Zeitinkremente $\Delta$ti haben in diesem Ausführungsbeispiel alle eine gleiche Länge von $\Delta$ti = 0,006 sec. Die einzelnen Energieverbräuche E($\Delta$ti) während des Zeitinkrementes $\Delta$ti werden bestimmt, indem während des Zeitinkrementes $\Delta$ti ein Drehmoment M(ti) des Werkzeugkopfes 6 ermittelt wird. Das Drehmoment M(ti) wird zu einem Zeitpunkt ti innerhalb des sehr kurzen Zeitinkrements $\Delta$ti gemessen. Das Drehmoment M(ti) ist während des Zeitinkrements $\Delta$ti im Wesentlichen konstant. Zusätzlich zum Drehmoment M(ti) wird eine Winkelgeschwindigkeit $\omega$(ti) zum Zeitpunkt ti während des Zeitinkrements $\Delta$ti bestimmt. Auch hinsichtlich der Winkelgeschwindigkeit $\omega$(ti) gilt, dass sie während der Dauer des Zeitinkrementes $\Delta$ti im Wesentlichen konstant ist und der Zeitpunkt ti auch hier beliebig innerhalb des kurzen Zeitinkrementes $\Delta$ti gewählt werden kann.

Das eine Drehmoment M(t) kann im Motor oder mittels eines Drehmomentmessers am rotierenden Werkzeugkopf 6 selbst ermittelt werden, und aus dem Drehmoment M(ti) zu dem jeweiligen Zeitpunkt ti und der Winkelgeschwindigkeit ω(ti) zum Zeitpunkt ti wird der einzelne Energieverbrauch E(Δti) während des Zeitinkrementes Δti gemäß E(Δti) = M(ti) * ω(ti) * Δti ermittelt.

Der eine Gesamtenergieverbrauch E(t) bis zum Zeitpunkt t ergibt sich durch die Summation der einzelnen Energieverbräuche E(Δti) gemäß $E(t) = \sum_{i=0}^{n} M(ti) * \omega(ti) * \Delta ti$ mit $t = \sum_{i=0}^{n} \Delta ti$ und n-Messungen von Drehmoment M(ti) und Winkelgeschwindigkeit ω(ti). Der bis zum Zeitpunkt t erforderliche eine Gesamtenergieverbrauch E(t) korreliert dabei mit der abgetragenen Materialmenge von dem einen Rohrabschnittsende 3. Eine Korrelation zwischen Gesamtenergieverbrauch E(t) und abgetragener Materialmenge kann empirisch und/oder numerisch bestimmt werden.

Gleichzeitig wird auf analoge Weise der Gesamtenergieverbrauch E'(t) des anderen Werkzeugkopfes 7 ermittelt. Die beiden Gesamtenergieverbräuche E(t), E'(t) werden miteinander verglichen und bei Abweichungen voneinander wird der Vorschub des mehr Gesamtenergie E(t), E'(t) verbrauchenden Werkzeugkopfes 6, 7 gegenüber dem weniger Gesamtenergie E(t), E'(t) verbrauchenden Werkzeugkopf 6, 7 reduziert, bis sich die Gesamtenergieverbräuche E(t), E'(t) wieder angeglichen haben. Dafür ist eine elektronische Steuerung der beiden Werkzeugköpfe 6, 7 vorgesehen, die mit einer Auswerteinheit der beiden Gesamtenergieverbräuche E(t), E'(t) verbunden ist.

Es wird insgesamt so viel Material abgetragen, dass der Rohrabschnitt 1 von der Ist-Länge L1 auf die Fertigungslänge L2 verkürzt wird.

**Bezugszeichenliste**

| | |
|---|---|
| 1 | Rohrabschnitt |
| 2 | Bereich |
| 3 | Rohrabschnittsende |
| 3' | Rohrabschnittsende |
| | |
| 6 | ein Werkzeugköpfe |
| 7 | anderer Werkzeugköpfe |
| 8 | eine Außenfase |
| 8' | andere Außenfase |
| 9 | eine Innenfase |
| 9' | andere Innenfase |
| 10 | ein Planaufmaß |
| 10' | anderes Planaufmaß |
| | |
| 11 | eine Schneidplatte |
| 12 | andere Schneidplatte |
| 13 | eine Schneidplatte |
| 11' | andere Schneidplatte |
| 12' | andere Schneidplatte |
| | |
| E(t) | ein Gesamtenergieverbrauch |
| E(Δti) | einzelne Energieverbräuche |
| E'(t) | anderer Gesamtenergieverbauch |
| E'(Δti) | andere einzelne Energieverbräuche |
| | |
| L | Längsrichtung |
| L1 | Ist-Länge |
| L2 | Fertigungslänge |
| | |
| M(t) | Drehmoment |
| M'(t) | anderes Drehmoment |
| M(ti) | ein Drehmoment zum Zeitpunkt ti |
| M'(ti) | anderes Drehmoment zum Zeitpunkt ti |
| ω(ti) | eine Winkelgeschwindigkeit zum Zeitpunkt ti |
| ω'(ti) | andere Winkelgeschwindigkeit zum Zeitpunkt ti |

R    Rotationsachse

t    Zeitpunkt
ta   Zeitpunkt
tb   Zeitpunkt
ti   Zeitpunkt

$\Delta$ti    Zeitinkrement

**Patentansprüche**

1. Verfahren zum Bearbeiten von einem Langprofilabschnitt (1) mit einer Ist-Länge (L1) und einem ersten und einem zweiten Ende (3, 3'), indem

das erste und das zweite Ende (3, 3') mit einem ersten bzw. einem zweiten Werkzeugkopf (6, 7) bearbeitet werden und während einer Bearbeitungsdauer fortlaufend Material durch den ersten und zweiten rotierenden Werkzeugkopf (6, 7) abgetragen wird, **dadurch gekennzeichnet, dass** die Bearbeitungsdauer (t) in Zeitinkremente ($\Delta$ti) aufgeteilt wird, zu den Zeitinkrementen ($\Delta$ti) jeweils ein Drehmoment (M(ti,) M'(ti)) des Werkzeugkopfes (6, 7) gemessen wird und zu jedem Zeitinkrement ($\Delta$ti) ein mit einer während des Zeitinkrementes ($\Delta$ti)) abgetragenen einzelnen Materialmenge korrespondierender einzelner Energieverbrauch (E($\Delta$ti), E'($\Delta$ti)) ermittelt wird und aus den einzelnen Energieverbräuchen (E($\Delta$ti), E'($\Delta$ti)) ein mit der abgetragenen Gesamtmaterialmenge korrespondierender Gesamtenergieverbrauch (E(t), E'(t)) sowohl des ersten als auch des zweiten Werkzeugkopfes (6, 7) ermittelt wird, wobei fortlaufend die abgetragene Materialmenge des ersten und des zweiten Endes (3, 3') bestimmt wird und die beiden Werkzeugköpfe (6, 7) so gesteuert werden, dass, wenn der Gesamtenergieverbrauch E(t) des einen Werkzeugkopfes (6) größer ist als der Gesamtenergieverbrauch E'(t) des anderen Werkzeugkopfes (7), der Vorschub des anderen Werkzeugkopfes (7) im Vergleich zum einen Werkzeugkopf (6) vergrößert wird.

2. Verfahren nach Anspruch 1,
**dadurch gekennzeichnet, dass** die beiden Gesamtenergieverbräuche (E(t), E'(t)) in ein vorgegebenes Verhältnis eingestellt werden.

3. Verfahren nach Anspruch 1 oder 2,
**dadurch gekennzeichnet, dass** während jedes Zeitinkrementes $\Delta$ti eine Winkelgeschwindigkeit $\omega$(ti), $\omega$'(ti) des Werkzeugkopfes (6, 7) gemessen wird und aus Winkelgeschwindigkeit $\omega$(ti), $\omega$'(ti) und dem Drehmoment (M(ti), M'(ti)) und der Dauer des Zeitinkrementes ($\Delta$ti) ein einzelner Energieverbrauch (E($\Delta$ti), E'($\Delta$ti)) während des Zeitinkrementes ($\Delta$ti) ermittelt wird.

4. Verfahren nach Anspruch 2 oder 3,
**dadurch gekennzeichnet, dass** die einzelnen Energieverbräuche (E($\Delta$ti)), E'($\Delta$ti)) jedes der Werkzeugköpfe (6, 7) aufsummiert werden und ein Gesamtenergieverbrauch (E(t)), E'(t)) jeder der Werkzeugköpfe (6, 7) bestimmt wird.

5. Verfahren nach Anspruch 4,
**dadurch gekennzeichnet, dass** die beiden Gesamtenergieverbräuche (E(t)), E'(t)) gleich eingestellt werden.

6. Verfahren nach einem der Ansprüche 1 bis 5,
**dadurch gekennzeichnet, dass** der Langprofilabschnitt (1) symmetrisch an seinen beiden Enden (3, 3') bearbeitet wird.

7. Verfahren nach einem der Ansprüche 1 bis 6,
**dadurch gekennzeichnet, dass** jeweils die Gesamtenergieverbräuche E(t), E'(t) jeder der beiden Werkzeugköpfe 6, 7 während eines Arbeitstaktes bestimmt werden und bei einer Abweichung der beiden Gesamtenergieverbräuche E(t), E'(t) voneinander der im nachfolgenden Arbeitstakt bearbeitete Langprofilabschnitt (1) unter Berücksichtigung der Gesamtenergieverbräuche E(t), E'(t) des Arbeitstaktes bearbeitet wird und die Differenz der Gesamtenergieverbräuche E(t), E'(t) verringert wird.

8. Verfahren nach einem der Ansprüche 1 bis 7,
**dadurch gekennzeichnet, dass** der Langprofilabschnitt ein Rohrabschnitt (1) ist und an den beiden Enden (3, 3') jeweils eine Innenfase (9, 9') und/oder eine Außenfase (8, 8') und/oder ein Planaufmaß (10, 10') abgetragen wird.

## Claims

1. Method for machining a longitudinal profile section (1) having an actual length (L1) and one and another end (3, 3'), wherein

   the one and the other end (3, 3') are machined using respectively one and another tool head (6, 7) and material is continuously abraded by the one and the other rotating tool head (6, 7) during a machining period, **characterized in that** the machining period (t) is divided into time increments ($\Delta$ti),

   a torque (M(ti,) M'(ti)) of the tool head (6, 7) is measured for each time increment ($\Delta$ti) and an individual energy consumption (E($\Delta$ti), E'($\Delta$ti)) is determined for each time increment ($\Delta$ti), said individual energy consumption corresponding to an individual quantity of material abraded during the time increment ($\Delta$ti), and a total energy consumption (E(t), E'(t)) both of the one and of the other tool head (6, 7) is determined from the individual energy consumptions (E($\Delta$ti), E'($\Delta$ti)), said total energy consumption corresponding to the total quantity of abraded material,

   wherein the abraded quantity of material of the one and the other end (3, 3') is determined continuously and the two tool heads (6, 7) are controlled in such a way that, if the total energy consumption E(t) of the one tool head (6) is greater than the total energy consumption E'(t) of the other tool head (7), the rate of advance of the other tool head (7) is increased in comparison to the one tool head (6)

2. Method according to claim 1,
   **characterized in that** the two total energy consumptions (E(t), E'(t)) are adjusted to a predefined ratio.

3. Method according to claim 1 or 2,
   **characterized in that** an angular velocity $\omega$(ti), $\omega$'(ti) of the tool head (6, 7) is measured during each time increment $\Delta$ti and an individual energy consumption (E($\Delta$ti), E'($\Delta$ti)) during the time increment ($\Delta$ti) is determined from the angular velocity $\omega$(ti), $\omega$'(ti) and the torque (M(ti), M'(ti)) and the duration of the time increment ($\Delta$ti).

4. Method according to claim 2 or 3,
   **characterized in that** the individual energy consumptions (E($\Delta$ti)), E'($\Delta$ti)) of each of the tool heads (6, 7) are summed and a total energy consumption (E(t)), E'(t) of each of the tool heads (6, 7) is determined.

5. Method according to claim 4,
   **characterized in that** the two total energy consumptions (E(t)), E'(t) are adjusted to be equal.

6. Method according to any one of claims 1 to 5,
   **characterized in that** the longitudinal profile section (1) is machined symmetrically at its two ends (3, 3').

7. Method according to any one of claims 1 to 6,
   **characterized in that** in each case the total energy consumptions E(t), E'(t) of each of the two tool heads 6, 7 are determined during one operating cycle and, if the two total energy consumptions E(t), E'(t) differ from one another, the longitudinal profile section (1) machined in the next working cycle is machined while taking account of the total energy consumptions E(t), E'(t) of the operating cycle and the difference between the total energy consumptions E(t), E'(t) is reduced.

8. Method according to any one of claims 1 to 7,
   **characterized in that** the longitudinal profile section is a pipe section (1) and respectively an inside chamfer (9, 9') and/or an outside chamfer (8, 8') and/or a flat face (10, 10') is abraded at the two ends (3, 3').

## Revendications

1. Procédé pour usiner une section de profil longitudinal (1) avec une longueur réelle (L1) et une extrémité et une autre extrémité (3, 3'), cependant que l'une extrémité et l'autre extrémité (3, 3') sont usinées avec une tête d'outil respectivement une autre tête d'outil (6, 7) et que de la matière est enlevée en continu pendant une durée d'usinage par l'une tête d'outil rotative et par l'autre tête d'outil rotative (6, 7), **caractérisé en ce que** la durée d'usinage (t) est divisée en incréments de temps ($\Delta$ti), qu'un couple de rotation (M(ti), M'(ti)) de la tête d'outil (6, 7) est mesuré pour chacun des incréments de temps ($\Delta$ti) et qu'une consommation d'énergie individuelle, qui correspond à une quantité de matériau individuelle enlevée pendant l'incrément de temps ($\Delta$ti), est déterminée pour chaque incrément de temps ($\Delta$ti) et qu'à partir des consommations d'énergie individuelles (E($\Delta$ti), E'($\Delta$ti)) une consommation d'énergie totale (E(t), E'(t)) qui correspond à la quantité de matériau totale enlevée ainsi que de l'une tête d'outil aussi bien que de l'autre tête d'outil (6, 7) est déterminée, cependant que la quantité de matériau enlevée de l'une extrémité et de l'autre extrémité (3, 3') est déterminée en continu et que les deux têtes d'outil (6, 7) sont commandées de telle manière que, lorsque la consommation d'énergie totale (E(t)) de l'une des têtes d'outil (6) est plus grande que la consommation d'énergie totale (E'(t)) de l'autre tête d'outil (7), l'avancement de l'autre tête d'outil (7) est agrandi par comparaison à l'une tête d'outil (6).

2. Procédé selon la revendication 1, **caractérisé en ce que** les deux consommations d'énergie totales (E(t), E'(t)) sont réglées dans un rapport prédéfini.

3. Procédé selon la revendication 1 ou 2, **caractérisé en ce qu'**une vitesse angulaire $\omega(ti)$, $\omega'(ti)$ de la tête d'outil (6, 7) est mesurée pendant chaque incrément de temps ($\Delta ti$) et qu'une consommation d'énergie individuelle (E($\Delta ti$), E'($\Delta ti$)) est déterminée pendant l'incrément de temps ($\Delta ti$) à partir de la vitesse angulaire $\omega(ti)$, $\omega'(ti)$, du couple de rotation (M(ti), M'(ti)) et de la durée de l'incrément de temps ($\Delta ti$).

4. Procédé selon la revendication 2 ou 3, **caractérisé en ce que** les consommations d'énergie individuelles (E($\Delta ti$), E'($\Delta ti$)) de chacune des têtes d'outil (6, 7) sont additionnées et qu'une consommation d'énergie totale (E(t), E'(t)) de chacune des têtes d'outil (6, 7) est déterminée.

5. Procédé selon la revendication 4, **caractérisé en ce que** les deux consommations d'énergie totales (E(t), E'(t)) sont réglées égales.

6. Procédé selon l'une des revendications 1 à 5, **caractérisé en ce que** la section de profil longitudinal (1) est usinée de manière symétrique à ses deux extrémités (3, 3').

7. Procédé selon l'une des revendications 1 à 6, **caractérisé en ce que** les consommations d'énergie totales (E(t), E'(t)) de chacune des deux têtes d'outil (6, 7) sont respectivement déterminées pendant un cycle de travail et que, lors d'une divergence des deux consommations d'énergie totales (E(t), E'(t)) l'une par rapport à l'autre, la section de profil longitudinal (1) usinée lors du cycle de travail suivant est usinée en tenant compte des consommations d'énergie totales (E(t), E'(t)) du cycle de travail et la différence des consommations d'énergie totales (E(t), E'(t)) est réduite.

8. Procédé selon l'une des revendications 1 à 5, **caractérisé en ce que** la section de profil longitudinal (1) est une section de tuyau (1) et qu'un chanfrein intérieur (9, 9') et/ou un chanfrein extérieur (8, 8') et/ou une surdimension (10, 10') est enlevée aux deux extrémités (3, 3').

Fig. 1

M(t)

Fig. 2

E(t)

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19637191 A1
- DE 3348159 C2
- DE 102004052790 B3
- DE 2208123 A
- DE 4318102 A1
- JP 60062439 A
- US 2008008549 A1